Europäisches Patentamt

European Patent Office

Office européen des brevets

(19)

(11) Veröffentlichungsnummer: **0 139 814**

A2

(12) # EUROPÄISCHE PATENTANMELDUNG

(21) Anmeldenummer: 84102842.6

(22) Anmeldetag: 15.03.84

(51) Int. Cl.⁴: **H 04 B 3/14**
**H 04 L 25/04**

(30) Priorität: 30.09.83 CH 5325/83

(43) Veröffentlichungstag der Anmeldung:
08.05.85 Patentblatt 85/19

(84) Benannte Vertragsstaaten:
AT CH DE FR GB IT LI NL

(71) Anmelder: SIEMENS-ALBIS AKTIENGESELLSCHAFT
EGA1/Verträge und Patente Postfach
CH-8047 Zürich(CH)

(84) Benannte Vertragsstaaten:
CH LI

(71) Anmelder: Siemens Aktiengesellschaft
Berlin und München Wittelsbacherplatz 2
D-8000 München 2(DE)

(84) Benannte Vertragsstaaten:
DE FR GB IT NL AT

(72) Erfinder: Amstutz, Johann
Schiltihaldesteig 6
CH-5312 Döttingen(CH)

(72) Erfinder: Wenger, Bruno
Aubrigstrasse 5
CH-8804 Au(CH)

(54) Aktive Entzerrerschaltung.

(57) Die aktive Entzerrerschaltung ist mit einer Entzerrerstruktur versehen, die ein zwischen dem Ausgang eines Addierverstärkers (OP) und dem Eingang der Entzerrerstruktur eingefügtes elektronisches Potentiometer aufweist, dessen geregeltes Ausgangssignal über die Reihenschaltung eines Impedanzwandlers (W) und einer Impedanz (YS) einem Addiereingang des Addierverstärkers (OP) zugeführt wird. Als elektronisches Potentiometer dient ein Regelnetzwerk (RN) mit mindestens einer stromgeregelten Schaltung, die zwischen dem Eingang des Impedanzwandlers (W) und dem Ausgang des Addierverstärkers (OP) und/oder zwischen dem Eingang des Impedanzwandlers (W) und dem Eingangsanschluss (A) der Entzerrerstruktur eingefügt ist. Die aktive Entzerrerschaltung kann in vorteilhafter Weise in einer Gabelanordnung zwischen dem Ausgang einer an eine Zweidrahtleitung angeschlossenen Gabelschaltung und dem Eingang eines Echokompensators eingefügt werden, der über eine Regelschaltung vom Ausgangssignal des Echokompensators geregelt ist.

EP 0 139 814 A2

FIG.2

Aktive Entzerrerschaltung

Die vorliegende Erfindung betrifft eine aktive Entzerrerschaltung nach dem Oberbegriff des Patentanspruches 1.

Entzerrerstrukturen verschiedenster Art finden in der Uebertragungstechnik breite Anwendung. So ist beispielsweise aus den "IEEE Transactions on Circuits and Systems", Vol. CAS-29, No. 5, Mai 1982, S. 316-322, Fig. 8, eine Entzerrerstruktur mit einem Potentiometer nach R.R. Cordell bekannt, das zwischen dem Ausgang eines Operationsverstärkers und der Eingangsklemme der Entzerrerstruktur eingefügt ist, indem die mittlere Anzapfung des Potentiometers über die Reihenschaltung eines Emitterfolgers und einer Impedanz mit dem invertierenden Eingang des Operationsverstärkers verbunden ist. Dabei ist dieser invertierende Eingang einerseits über einen Vorwiderstand an die Eingangsklemme der Entzerrerstruktur und andererseits über einen Rückkopplungswiderstand an den Ausgang des Operationsverstärkers angeschlossen. Eine solche Entzerrerstruktur mit einem elektronischen Potentiometer kann in vorteilhafter Weise als aktive Entzerrerschaltung eingesetzt werden. Der Nachteil einer solchen Entzerrerstruktur besteht darin, dass keiner der drei Anschlüsse des elektronischen Potentiometers auf Erde liegt und dieses daher nur mit relativ grossem Aufwand zu realisieren ist.

Zweck der vorliegenden Erfindung ist, eine aktive Entzerrerschaltung spezieller Art anzugeben, die sich leicht realisieren und kaskadieren lässt. Dies wird durch die im kennzeichnenden Teil des Patentanspruches 1 angegebenen Massnahmen erreicht.
Vorteilhafte Ausgestaltungen der Erfindung sind in weiteren Ansprüchen umschrieben.

Nachfolgend wird die Erfindung anhand von Zeichnungen beispielsweise näher erläutert. Dabei zeigt:

Fig. 1   das Blockschaltbild einer Gabelanordnung mit einer aktiven Entzerrerschaltung nach der Erfindung,

Fig. 2   das Blockschaltbild einer Struktur für eine solche aktive Entzerrer-,
schaltung,

Fig. 3   das Blockschaltbild eines aktiven Regelnetzwerkes für eine solche
Entzerrerstruktur,

Fig. 4   das Blockschaltbild zweier in Reihe geschalteter Entzerrerstrukturen
dieser Art.

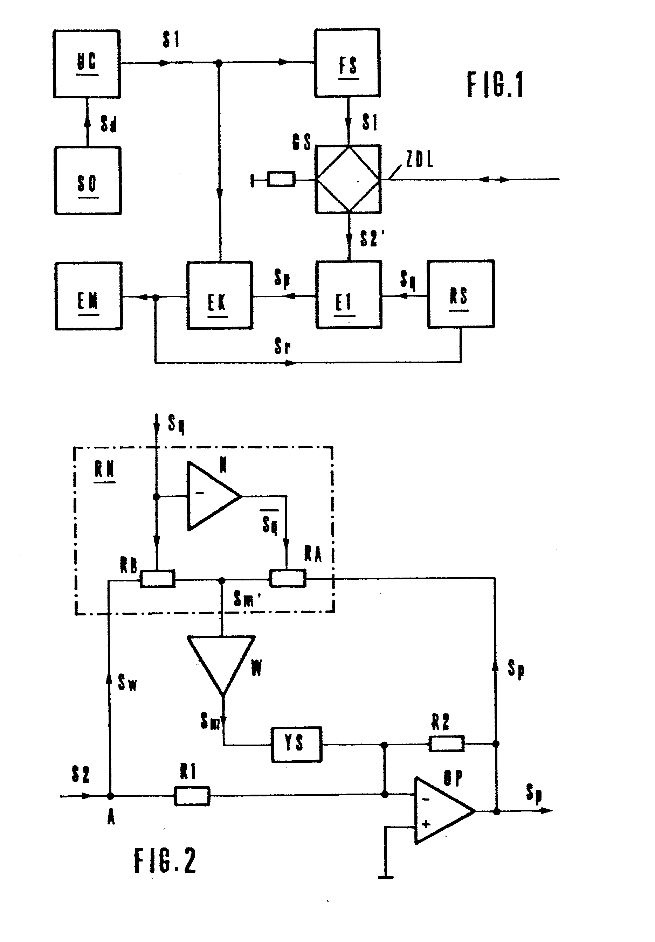

Die in Fig. 1 dargestellte Gabelanordnung weist eine Datensendequelle SQ auf, deren Ausgangssignal Sd gegebenenfalls über einen Umcoder UC dem Steuereingang eines Echokompensators EK und dem Eingang einer an eine Zweidrahtleitung ZDL angeschlossenen Gabelschaltung GS zugeführt wird, mit deren Ausgangssignal S2 der Eingang einer aktiven Entzerrerschaltung E1 beaufschlagt wird, deren Ausgangssignal Sp einem weiteren Eingang des Echokompensators EK zugeführt wird. Dabei wird das Ausgangssignal Sr des Echokompensators EK sowohl dem Eingang eines Datenempfängers EM als auch dem Eingang einer Regelschaltung RS zugeführt, mit deren Ausgangssignal Sq die aktive Entzerrerschaltung E1 gesteuert wird. Eine solche Gabelanordnung, jedoch ohne die Regelschaltung RS, ist an sich bekannt, so dass ihre Arbeitsweise hier nicht näher beschrieben werden muss.

Die in Fig. 2 dargestellte Entzerrerstruktur entspricht der eingangs erwähnten von R.R. Cordell, indem hier ein Regelnetzwerk RN als Ersatz für das Potentiometer vorgesehen ist. Dabei entspricht das Eingangssignal S2 an der Eingangsklemme A der Entzerrerstruktur dem Eingangssignal S2 der aktiven Entzerrerschaltung E1 in Fig. 1, das Ausgangssignal Sp des Operationsverstärkers OP ihrem Ausgangssignal und das Steuersignal Sq des Regelnetzwerkes RN dem Steuersignal der Entzerrerschaltung E1 in Fig. 1. Das Ausgangssignal Sm' des Regelnetzwerkes RN wird über die Reihenschaltung eines Impedanzwandlers W und der Impedanz YS dem invertierenden Eingang des Operationsverstärkers OP zugeführt. Die Arbeitsweise einer solchen Entzerrerstruktur mit einem Regelnetzwerk anderer Art ist an sich aus der erwähnten Literaturstelle bekannt und wird daher nicht näher beschrieben.

Das Regelnetzwerk RN nach Fig. 2 weist je einen Eingang für die Signale Sp, Sq und Sw sowie einen Ausgang für das Signal Sm' auf. Dabei wird über einen ersten Widerstand RA das Signal Sp und über einen zweiten Widerstand RB das Signal Sw

dem Eingang des Impedanzwandlers W zugeführt. Das Signal Sq kann einerseits zur Steuerung des Widerstandes RB verwendet und andererseits zur Steuerung des Widerstandes RA über einen invertierenden Verstärker N geführt werden.

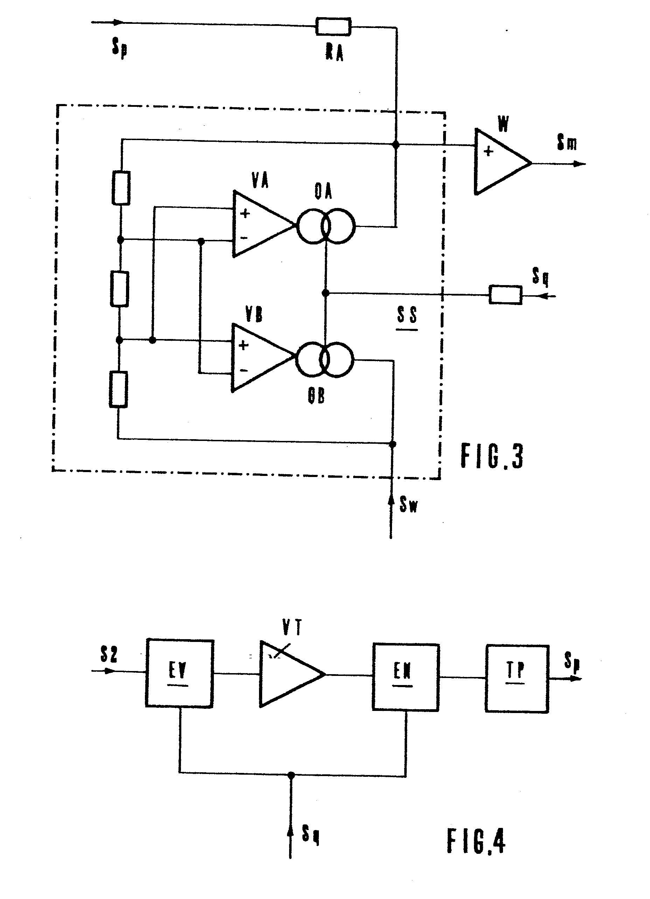

Dabei können die Widerstände RA und/oder RB durch eine sogenannte stromgesteuerte Schaltung SS gebildet sein, wie in Fig. 3 gezeigt. Wenn beispielsweise RA als fester Widerstand gewählt wird, so entfällt der invertierende Verstärker N. Die Arbeitsweise einer solchen stromgesteuerten Schaltung (SS) ist beispielsweise aus "Elektronik" 5/11.3.1983, S. 89-90, bekannt und wird daher ebenfalls nicht näher beschrieben.

Durch die Erfindung wurde die Erkenntnis gewonnen, dass die Realisierung der Elemente RA und/oder RB als stromgesteuerte Schaltungen SS in einer Entzerrerstruktur gemäss Fig. 2 einen aktiven Entzerrer ergibt, der mit einem relativ geringen Aufwand realisierbar ist. Dabei kann die Impedanz YS lediglich aus der Parallelschaltung mehrerer Widerstand/Kondensator-Glieder (RC-Glieder) bestehen. Ein solcher Entzerrer kann ohne weiteres zwischen dem Ausgang des Echokompensators EK und dem Eingang des Empfängers EM in einer Gabelschaltung nach dem Stande der Technik eingesetzt werden, bei dem der Entzerrer E1 ein Festentzerrer ist. Darüber hinaus kann der erfindungsgemässe Entzerrer nach Fig. 2 und 3 auch als variabler Entzerrer E1 gemäss Fig. 1 zwischen dem Ausgang der Gabelschaltung GS und dem Eingang des Echokompensators EK eingeführt werden, ohne dass Instabilitäten auftreten. Zudem kann der Entzerrer E1 in Fig. 1 auch eine aktive Entzerrerschaltung nach Fig. 4 sein, die aus der Reihenschaltung eines ersten variablen Entzerrers EV, eines Verstärkers mit Bandpasscharakteristik VT, eines zweiten variablen Entzerrers EN und eines beispielsweise aktiven Tiefpasses besteht, indem beide Entzerrer EV und EN gemeinsam gesteuert werden können, ohne dass dabei Instabilitäten entstehen. Die Entzerrer EV und EN können gleich oder ähnlich aufgebaut sein. Ein einzelner Entzerrer nach Fig. 2 und 3 oder eine Entzerrerschaltung nach Fig. 4 mit mindestens zwei Entzerrern EV, EN nach Fig. 2 und 3 können auch eingesetzt werden, wenn dem Eingang der entsprechenden Gabelschaltung GS der entfernten Gegenstation ein Filternetzwerk FS vorgeschaltet wird, das rechteckförmige Eingangsimpulse S1 in Ausgangsimpulse S1' mit einem cosinus-förmigen Frequenzspektrum umwandelt, wodurch ein Uebertragungssystem mit zwei Gabelanordnungen geschaffen wird, das eine vorteilhafte Kombination zwischen der gewünschten Augenöffnung und der Dämpfung im Frequenzbereich oberhalb einer vorgegebenen Grenzfrequenz ergibt. Schliesslich sei noch erwähnt, dass der invertierende Eingang des Operationsverstärkers OP als Summationspunkt dient, weshalb der Operationsverstärker OP durch eine Addier- und Verstärkerschaltung oder einen Addierverstärker ersetzt werden kann.

# PATENTANSPRUECHE

1. Aktive Entzerrerschaltung mit einer Entzerrerstruktur, die ein zwischen dem Ausgang eines Addierverstärkers (OP) und dem Eingang der Entzerrerstruktur eingefügtes elektronisches Potentiometer (RN) aufweist, dessen geregeltes Ausgangssignal über die Reihenschaltung eines Impedanzwandlers (W) und einer Impedanz (YS) einem Addiereingang des Addierverstärkers (OP) zugeführt wird, d a d u r c h  g e - k e n n z e i c h n e t , dass als elektronisches Potentiometer ein Regelnetzwerk (RN) mit mindestens einer stromgeregelten Schaltung (SS) vorgesehen ist, die zwischen dem Eingang des Impedanzwandlers (W) und dem Ausgang des Addierverstärkers (OP) und/oder zwischen dem Eingang des Impedanzwandlers (W) und dem Eingang (A) der Entzerrerstruktur eingefügt ist.

2. Aktive Entzerrerschaltung nach Anspruch 1, d a d u r c h  g e k e n n z e i c h - n e t , dass eine stromgeregelte Schaltung (RA) vorhanden ist, die mit dem invertierten Steuersignal (sq) der aktiven Entzerrerschaltung geregelt wird.

3. Aktive Entzerrerschaltung nach Anspruch 1 oder 2, d a d u r c h  g e k e n n - z e i c h n e t , dass der Entzerrerstruktur (EV) mindestens eine weitere Entzerrer- struktur (EN) in Reihe nachgeschaltet ist.

4. Aktive Entzerrerschaltung nach Anspruch 3, d a d u r c h  g e k e n n z e i c h - n e t , dass zwischen zwei Entzerrerstrukturen (EV) und (EN) ein Verstärker (VT) mit Bandpasscharakteristik eingefügt ist.

5. Aktive Entzerrerschaltung nach einem der Ansprüche 1 bis 4, d a d u r c h g e k e n n z e i c h n e t , dass der Entzerrerstruktur mindestens ein Tiefpassfilter (TP) nachgeschaltet ist.

6. Anwendung einer aktiven Entzerrerschaltung nach einem der Ansprüche 1 bis 5 in einer Gabelanordnung als variabler Entzerrer, der zwischen dem Ausgang einer an eine Zweidrahtleitung (ZDL) angeschlossenen Gabelschaltung (GS) und dem Eingang eines Echokompensators (EK) eingefügt und der über eine Regelschaltung (RS) vom Aus- gangssignal (Sr) des Echokompensators (EK) geregelt ist.

7. Anwendung einer aktiven Entzerrerschaltung nach Anspruch 6, d a d u r c h
g e k e n n z e i c h n e t , dass dem Eingang der Gabelschaltung (GS) ein Filternetzwerk (FS) vorgeschaltet ist, das rechteckförmige Eingangsimpulse (S1) in Ausgangsimpulse (S1') mit einem cosinus-förmigen Frequenz-Spektrum umwandelt.

FIG.1

FIG.2

0139814

83P9812

FIG.3

FIG.4